Europäisches Patentamt

European Patent Office

Office européen des brevets

(19)

(11) **EP 1 235 981 B1**

(12) **FASCICULE DE BREVET EUROPEEN**

(45) Date de publication et mention
de la délivrance du brevet:
**19.10.2005 Bulletin 2005/42**

(21) Numéro de dépôt: **00988879.3**

(22) Date de dépôt: **06.12.2000**

(51) Int Cl.⁷: $F03B\ 1/02$

(86) Numéro de dépôt international:
**PCT/FR2000/003412**

(87) Numéro de publication internationale:
**WO 2001/042645 (14.06.2001 Gazette 2001/24)**

(54) **PROCEDE D'ASSEMBLAGE D'UNE ROUE DE TURBINE DE TYPE PELTON**

MONTAGEVERFAHREN FÜR PELTONTURBINE-LAUFRAD

METHOD FOR ASSEMBLING A PELTON TURBINE WHEEL

(84) Etats contractants désignés:
**AT BE CH CY DE DK ES FI FR GB GR IE IT LI LU
MC NL PT SE TR**
Etats d'extension désignés:
**RO**

(30) Priorité: **10.12.1999 FR 9915637**

(43) Date de publication de la demande:
**04.09.2002 Bulletin 2002/36**

(73) Titulaire: **ALSTOM Power Hydro
38100 Grenoble (FR)**

(72) Inventeurs:
• **ROSSI, Georges
F-38330 Saint Ismier (FR)**

• **FINET, Louis
F-38450 Vif (FR)**
• **FREYNET, Francis
F-38100 Grenoble (FR)**
• **MICHEL, Bernard
F-38410 Vaulnaveys le Bas (FR)**

(74) Mandataire: **Myon, Gérard Jean-Pierre et al
Cabinet Lavoix,
62, rue de Bonnel
69448 Lyon Cédex 03 (FR)**

(56) Documents cités:
**EP-A- 0 843 092        FR-A- 570 124
FR-A- 2 776 341        GB-A- 688 577**

## Description

L'invention a trait à un procédé d'assemblage d'une roue de turbine de type Pelton, à un auget pour une telle roue et à une roue équipée d'un tel auget.

Les turbines Pelton sont classiquement utilisées pour transformer l'énergie cinétique d'un fluide, tel que l'eau d'une chute, en énergie mécanique. Cette transformation s'effectue par la mise en rotation de la roue de turbine sous l'effet d'un effort tangentiel exercé, sur des augets disposés à la périphérie d'une jante, par un jet d'eau sortant d'un ou plusieurs injecteurs répartis autour de la roue.

Par la demande de brevet internationale WO-A-99/49 213, il est connu d'utiliser deux flasques annulaires solidaires de la jante pour soutenir les augets d'une roue de turbine Pelton, ce qui permet une distribution optimisée des efforts subis par les augets, les contraintes mécaniques n'étant alors plus concentrées dans une zone d'attache de l'auget sur la jante. Dans ce dispositif connu, chaque auget est en appui, par une surface convexe, contre des bras rayonnant des flasques et immobilisé par rapport à chaque flasque grâce à une vis de blocage.

Les augets d'une telle roue de turbine subissent un grand nombre d'impacts dus aux jets de fluide d'entraînement en provenance des injecteurs. Ces impacts ont pour effet de plaquer alternativement chaque auget sur les bras rayonnants contre lesquels il est en appui, ce qui résulte dans une sollicitation alternée des matériaux constitutifs des augets et des flasques. En outre, l'appui surfacique des augets sur les flasques nécessite un ajustement précis des dimensions externes de chaque auget et des logements correspondants prévus dans les flasques. Un tel ajustement ne permet pas une interchangeabilité des augets, ce qui complexifie d'autant la fabrication et la maintenance d'une telle roue.

C'est à ces inconvénients qu'entend plus particulièrement remédier l'invention, en proposant un procédé d'assemblage d'une roue, telle que connue de WO-A-99/49 213, qui permet d'éviter que les impacts des jets de fluide d'entraînement ne génèrent une fatigue et/ou une sollicitation alternée de l'auget par rapport à la jante ou aux flasques.

Ce procédé consiste à :

- pré-positionner, dans un logement d'un flasque, un auget en appui par une partie de sa face externe convexe contre un bord de ce logement, en ménageant un espace entre la face convexe de la partie radiale externe de cet auget et ce bord,
- réaliser une liaison articulée de cet auget sur la jante et/ou le flasque du côté intérieur de l'auget,
- exercer sur la partie radiale externe de l'auget un premier effort calibré de rapprochement par rapport au flasque,
- déterminer la distance entre cette partie radiale externe et ce bord sous cet effort calibré,

- relâcher cet effort calibré,
- disposer, entre cette partie radiale externe et ce bord, une cale d'épaisseur sensiblement égale à la distance précitée et
- exercer sur cette partie radiale externe et maintenir un second effort de rapprochement par rapport au bord, ce second effort ayant une intensité supérieure ou égale à celle du premier effort.

Grâce à l'invention, l'auget monté sur la roue est soumis à une pré-contrainte formée par le second effort calibré qui a pour effet de l'immobiliser fermement par rapport au flasque et de rattraper, avec la cale, l'écart existant entre la partie radiale externe de l'auget et le flasque. Après établissement de la pré-contrainte, la cale permet de "filtrer" les efforts dynamiques exercés sur l'auget, notamment au niveau de sa partie radiale externe. L'utilisation d'une cale, d'épaisseur déterminée en fonction de la géométrie exacte de l'auget et du flasque et de la réaction de l'auget au premier effort calibré de rapprochement, permet d'envisager une interchangeabilité des augets, seule l'épaisseur de chaque cale devant être ajustée de façon précise à la géométrie des pièces environnantes.

Selon un premier aspect avantageux de l'invention, le procédé consiste à exercer les efforts calibrés au moyen d'une vis de blocage reçue dans un logement ménagé dans le flasque et pénétrant dans un taraudage ménagé dans la partie radiale externe de l'auget. L'effort calibré peut ainsi être exercé au moyen d'une clef dynamométrique ou tout autre moyen de serrage contrôlé et avoir une intensité importante, notamment dans le cas d'une roue de diamètre important.

Selon un autre aspect avantageux de l'invention, les premier et second efforts calibrés précités de rapprochement sont sensiblement de même intensité. Ainsi, en configuration montée de la roue, chaque auget est en appui contre la cale correspondante sous l'effet de l'effort calibré utilisé pour déterminer l'épaisseur de cette cale. Ce montage permet d'obtenir un effort constant dans les vis de blocage en filtrant les efforts alternés dus aux impacts des jets de fluide.

L'invention concerne également un auget de roue de turbine permettant de mettre en oeuvre le procédé tel que précédemment décrit et, plus spécifiquement, un auget comprenant une face bi-concave d'écoulement d'un fluide d'entraînement de la roue et une face convexe apte à coopérer avec au moins un flasque annulaire solidaire d'une jante de la roue. Cet auget est caractérisé en ce que sa face convexe forme au moins une zone d'appui localisée contre le flasque et au moins une zone distante du flasque dans une partie radiale externe de l'auget, cette zone distante du flasque étant apte à être rapprochée d'une partie en regard du flasque par un effort calibré.

Selon des aspects avantageux mais non obligatoires de l'invention, cet auget incorpore une ou plusieurs des caractéristiques suivantes :

- La face convexe de l'auget forme également une zone distante du flasque dans une partie radiale interne de l'auget. Ainsi, la zone d'appui localisée sur le flasque est formée uniquement dans une partie centrale de cette surface convexe, ce qui permet un certain déplacement de l'auget selon une direction radiale.

- L'auget comprend, au niveau de la partie radiale externe et/ou de la partie radiale interne de sa face concave, au moins un guide apte à conférer à l'écoulement du fluide précité une composante divergente accentuée par rapport à une arête médiane de l'auget. Ce guide permet d'éviter que le fluide en cours d'écoulement ne vienne heurter un bras rayonnant du flasque disposé en regard de la face concave de l'auget. On peut prévoir que ce guide est apte à diriger l'écoulement jusqu'au niveau d'un dégagement ménagé dans un bras rayonnant du flasque disposé en regard de cette surface concave. Ce guide est avantageusement formé par une nervure s'étendant, à partir d'une zone d'extrémité radiale externe de l'auget, en direction d'une partie radiale interne de l'auget, cette nervure bordant l'échancrure externe de l'auget

L'invention concerne enfin une roue de turbine de type Pelton qui comprend une jante, au moins un flasque annulaire, solidaire de la jante et pourvu de logements de réception d'augets, et au moins un auget tel que précédemment décrit.

Une telle roue comprend avantageusement, pour cet auget ou pour chaque auget, une cale disposée entre la zone distante précitée et le flasque, l'auget ou chacun des augets étant soumis à un effort calibré de rapprochement de cette zone distante et du flasque.

Selon un autre aspect avantageux de l'invention, le ou chaque flasque est pourvu de dégagements d'écoulement du fluide d'entraînement de la turbine à partir de la surface concave de chaque auget, les dégagements étant formés sur une surface latérale externe du flasque.

L'invention sera mieux comprise et d'autres avantages de celle-ci apparaîtront plus clairement à la lumière de la description qui va suivre de deux modes de réalisation d'une roue de turbine Pelton conforme à son principe, donnée uniquement à titre d'exemple et faite en référence aux dessins annexés dans lesquels :

- La figure 1 est une vue en perspective partielle d'une roue de turbine Pelton conforme à l'invention ;
- La figure 2 est une coupe selon la ligne II-II à la figure 1 ;
- La figure 3 est une coupe selon la ligne III-III à la figure 2 lors d'une première étape d'assemblage de la roue de la figure 1, plusieurs augets étant représentés ;
- La figure 4 est une vue analogue à la figure 3 lors d'une seconde étape du procédé d'assemblage ;

- La figure 5 est une vue analogue à la figure 3 lors d'une troisième étape du procédé d'assemblage ;
- La figure 6 est une vue en perspective partielle de l'auget de la roue des figures 1 à 5 ;
- La figure 7 est une vue analogue à la figure 6 pour un auget conforme à un second mode de réalisation de l'invention.

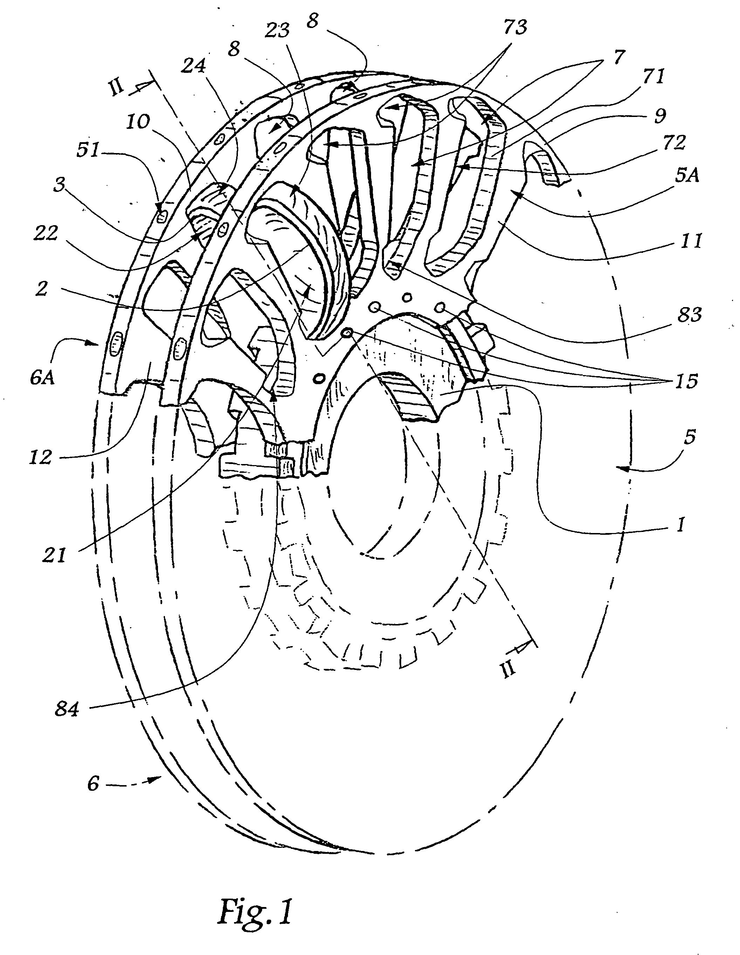

La roue de turbine représentée aux figures 1 à 6 comprend une jante 1 et des augets 2, au nombre de dix-huit dans l'exemple représenté, répartis à la périphérie de la jante 1. Chaque auget comprend deux cuillers ou bols 3 séparés par une arête médiane 4 destinée à être disposée en regard d'un ou plusieurs injecteurs d'eau ou de vapeur non représentés. La jante 1 est prévue pour être montée sur un arbre de transfert du mouvement également non représenté.

Pour la clarté du dessin, un seul auget est représenté à la figure 1.

Deux flasques 5 et 6 en forme d'anneau sont montés sur la jante 1 et contribuent au maintien des augets 2 par rapport à cette jante. Les flasques 5 et 6 sont respectivement pourvus de logements 7 et 8 dans lesquels peuvent être insérées les cuillers 3 des augets 2. Deux bandes 9 et 10 de matière continue sont respectivement formées dans les zones périphériques externes des flasques 5 et 6. Ces bandes 9 et 10 relient des bras rayonnants 11 et 12 formés par les flasques 5 et 6, respectivement entre des logements adjacents 7 et 8.

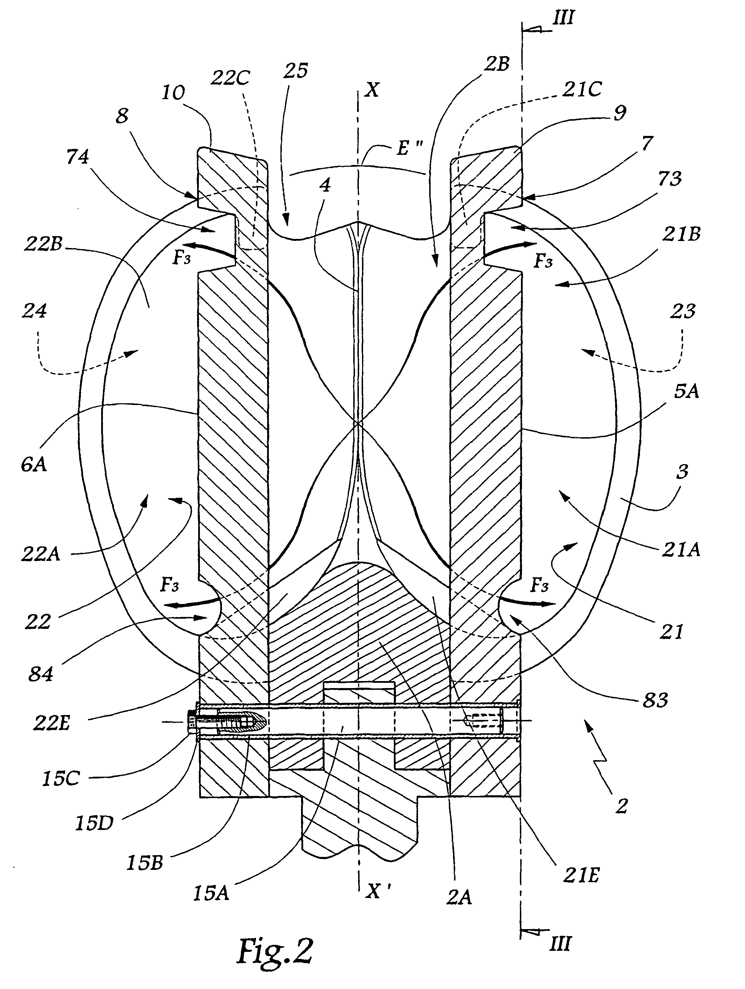

Chaque auget 2 est monté sur la jante 1 et les flasques 2 grâce à une goupille 15 installée suivant un montage dit "compound" et apparaissant plus clairement à la figure 2. Cette goupille comprend un corps principal 15A légèrement conique inséré dans un manchon fendu 15B, lui même introduit dans des perçages correspondants des flasques 5 et 6 et de la jante 1. Une vis 15C de blocage coopère avec une rondelle 15D pour le serrage de la goupille 15 en position.

Chaque auget 2 définit deux surfaces concaves 21 et 22 entre lesquelles s'étend l'arête 4 selon un axe radial X-X' formant axe de symétrie de l'auget 2. L'auget 2 définit également deux surfaces convexes 23 et 24 formant ensemble la surface extérieure de chaque cuiller 3. Chaque auget 2 comprend une partie radiale interne 2A au niveau de laquelle il est solidarisé avec la jante 1 et les flasques 5 et 6 par la goupille 15. Chaque auget 2 comprend également une partie radiale externe 2B située à proximité des bandes 9 et 10 en configuration montée de la roue et dans laquelle il est défini une échancrure externe 25 permettant l'injection du jet d'eau dans l'auget 2.

On note respectivement 23A et 23B les parties radiales interne et externe de la surface 23.

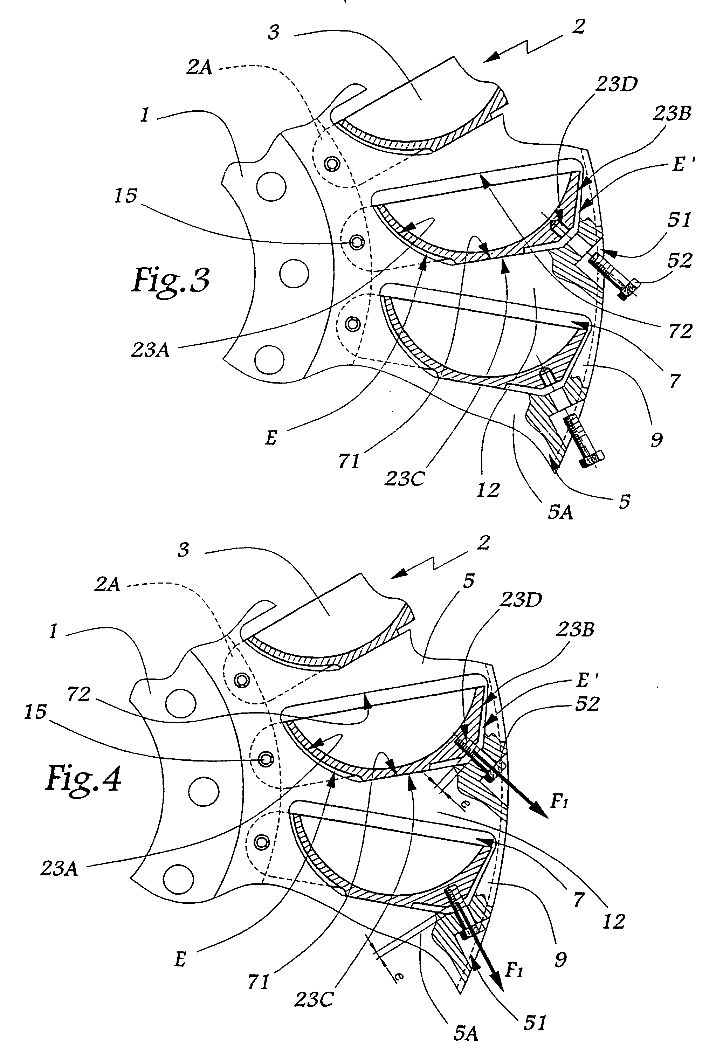

Comme il ressort plus clairement des figures 3 à 5, un talon ou partie en saillie 23C dépasse de la surface 23 par rapport aux parties 23A et 23B, le talon 23C étant ménagé dans une zone intermédiaire de l'auget 2.

La géométrie de la surface 24 est analogue à celle de la surface 23 et comprend également une partie en saillie ou talon.

Chaque logement 7 est défini par un bord concave 71 et un bord sensiblement rectiligne 72 entre lesquels est insérée une cuiller 3 d'un auget 2, la surface 23 de cette cuiller longeant le bord 71. De même, chaque logement 8 reçoit la cuiller 3 de l'auget 2 située sur la gauche de l'axe X-X' à la figure 2.

Comme il ressort plus particulièrement de la figure 3, la géométrie du bord 71 et de la surface 23 est telle que la surface 23 est en appui contre le bord 71 uniquement au niveau de sa zone centrale ou talon 23C, deux espaces E et E' étant respectivement ménagés entre la partie 23A et le bord 71 d'une part, et entre la partie 23B et le bord 71 d'autre part.

Lors de l'étape d'assemblage de la roue représentée à la figure 3, on met en place chaque auget 2 dans les logements 7 et 8 correspondants et l'on insère la goupille 15 dans les perçages correspondants des augets de la jante et des flasques, sans serrer cette goupille, de telle sorte qu'on réalise une liaison articulée de chaque auget sur la jante et les flasques.

On insère alors dans un logement 51 prévu dans la bande 9 du flasque 5, une vis 52 dont la tige traverse le logement 51 et peut être insérée dans un taraudage 23D prévu dans la partie 23B de la surface 23. On visse alors la vis 52 avec une clef dynamométrique, ou un autre moyen de serrage contrôlé tel qu'un vérin de précontrainte ou une canne chauffante, de façon à obtenir un effort calibré de rapprochement de la partie 2B de l'auget 2 et du bord 71 du logement 7. On procède de la même manière en ce qui concerne la seconde cuiller de l'auget 2.

On est alors dans la position de la figure 4 ou un effort calibré $F_1$ est exercé sur la partie 2B par la vis 52 et la vis équivalente prévue dans le second flasque 6. Dans cette configuration, on mesure l'écartement e existant entre la partie 23B de la surface 23 et le bord 71 du logement 7. Cet écartement e peut être différent d'un auget à l'autre compte tenu des tolérances de fabrication de la jante, des flasques et des augets. On mesure l'écart équivalent entre la partie externe de la surface 24 et le bord concave du logement 8.

En pratique, on met en place tous les augets 2 dans les logements 7 et 8 et l'on serre, progressivement, selon un ordre logique, l'ensemble des vis 52 et équivalentes afin de mettre tous les augets sous précontrainte $F_1$ de rapprochement de leurs parties radiales externes respectives 2B par rapport aux flasques 5 et 6 pour assurer une symétrie d'ensemble. Ensuite, on mesure les écarts e car ces écarts dépendent, notamment, de la répartition d'efforts dans les flasques 5 et 6.

Lorsque les écarts e ont été déterminés, on façonne des cales 53 dont chacune a une épaisseur égale à l'écartement e entre un auget et le flasque tel que défini précédemment. Ensuite, après avoir desserré les vis 52, c'est-à-dire relâcher l'effort $F_1$, on met en place les cales 53 chacune entre l'auget 2 et le bord 71 ou équivalent du logement 7 ou 8 dans lequel il est inséré et pour lequel la cale 53 a été façonnée. En d'autres termes, chaque cale 53 est dédiée à un couple formé d'un auget 2 et d'un logement 7 ou 8.

Lorsque la cale 53 est en place, on serre à nouveau les vis 52 et équivalentes avec un effort calibré $F_2$ d'intensité supérieure ou égale à celle de l'effort $F_1$ utilisé précédemment. On soumet ainsi la partie radiale externe 2B de chaque auget 2 à un effort $F_2$ de rapprochement de cette partie par rapport au bord 71 ou équivalent du logement.

Comme l'effort $F_2$ est au moins aussi intense que l'effort $F_1$, on est sûr que la partie 23B de la surface 23 est en appui ferme contre la cale 53 qui est elle-même en appui ferme contre le bord 71 du logement 7 ou équivalent. Chaque auget est ainsi soumis à une précontrainte $F_2$ qui le plaque efficacement contre le flasque, en pivotement autour de l'axe de la goupille 15. Chaque auget 2 est donc fermement maintenu en position et ne risque pas d'osciller sous l'effet des impacts du fluide issu des injecteurs.

On serre alors les goupilles 15, de telle sorte que la liaison articulée créée à leur niveau est verrouillée.

Au terme du montage, l'auget 2 peut être modélisé comme une poutre articulée du côté de la goupille et en appui sur les zones centrales 23c et équivalente alors qu'elle est soumise à un effort de plaquage contre le bord 71.

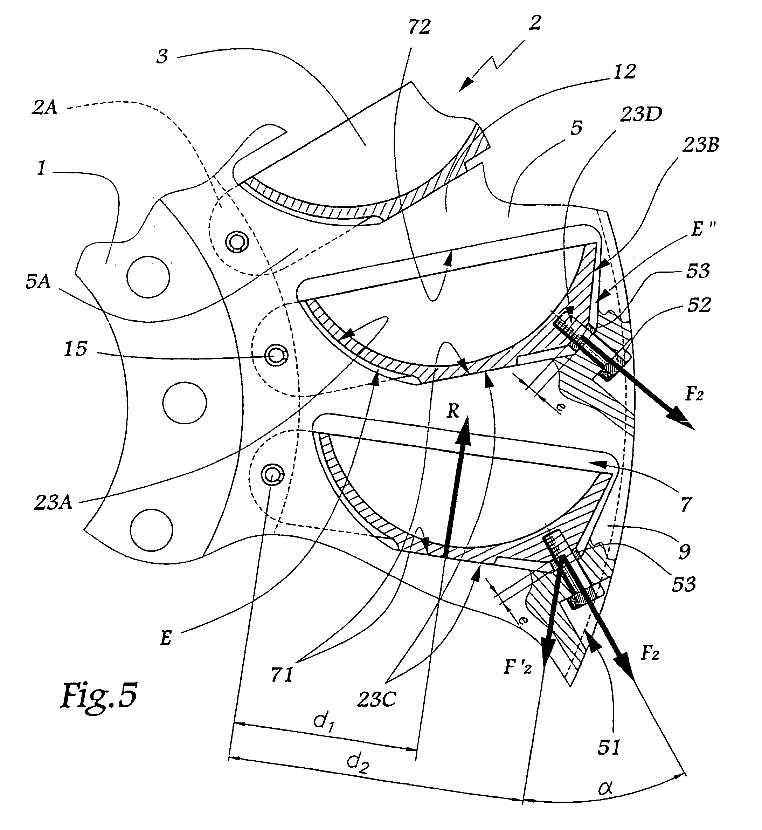

Comme il ressort plus particulièrement de la figure 5, chaque auget 2 est soumis à un effort de réaction R de la part du flasque 5 ou 6 et à l'effort $F_2$, l'effort $F_2$ ayant une intensité égale à la section de la vis 52 multipliée par la force de serrage.

Dans le cas d'une vis de type M16 serrée à 200MPa, l'effort $F_2$ a une valeur définie comme suit :

$$F_2 = 144 \text{ mm}^2 \text{ X } 200\text{MPa} = 28\ 800\text{N}.$$

La composante tangentielle $F'_2$ de l'effort $F_2$ est égale à $F'_2 = F_2 \text{ X cos }(\alpha)$ où $\alpha$ est l'angle d'ouverture de l'effort $F_2$ par rapport à la réaction R. En supposant $\alpha$ égal à 30°, on obtient

$$F'_2 = 24\ 940 \text{ N.}$$

A l'équilibre, la précontrainte exercée par l'effort de réaction R sur l'auget 2 qui résulte de la composante $F'_2$ peut être exprimé en fonction des distances $d_1$ et $d_2$ définies respectivement entre la goupille 15 et un point d'application de la réaction R et entre la goupille 15 et le point d'application de l'effort $F_2$ comme

$$R = F'_2 \times \underline{d}_2/\underline{d}_1.$$

Par ailleurs, l'effort de l'impact exercé par le jet sur chaque auget 2 peut être déterminé par le calcul et il suffit de choisir la force de serrage des vis 52 et équivalentes et le rapport $\underline{d}_2/\underline{d}_1$ pour que l'effort R soit en permanence supérieur ou égal à l'effort subi par l'auget sous l'effet de l'impact précité. On peut, par exemple, utiliser un coefficient de sécurité de l'ordre de 1,5.

Ainsi, chaque auget est fermement maintenu en position par rapport à son environnement et son matériau constitutif n'est pas sollicité en fatigue par les impacts qu'il subit.

Le procédé de l'invention est efficace pour autant que l'effort $F_2$ est supérieur en valeur à l'effort $F_1$, ce qui permet d'assurer que chaque auget 2 est effectivement plaqué contre la cale 53 ou équivalente adjacente.

Selon une variante avantageuse de l'invention, les efforts $F_1$ et $F_2$ peuvent être sensiblement égaux, auquel cas les vis 52 et équivalentes ne sont pas soumises à un effort d'élongation important alors que chaque auget est efficacement maintenu en position.

Le fait qu'un espace E est prévu entre la partie 23A de la surface 23 et le bord 71 assure que le système formé d'un auget 2 et d'un flasque 5 ou 6 est isostatique.

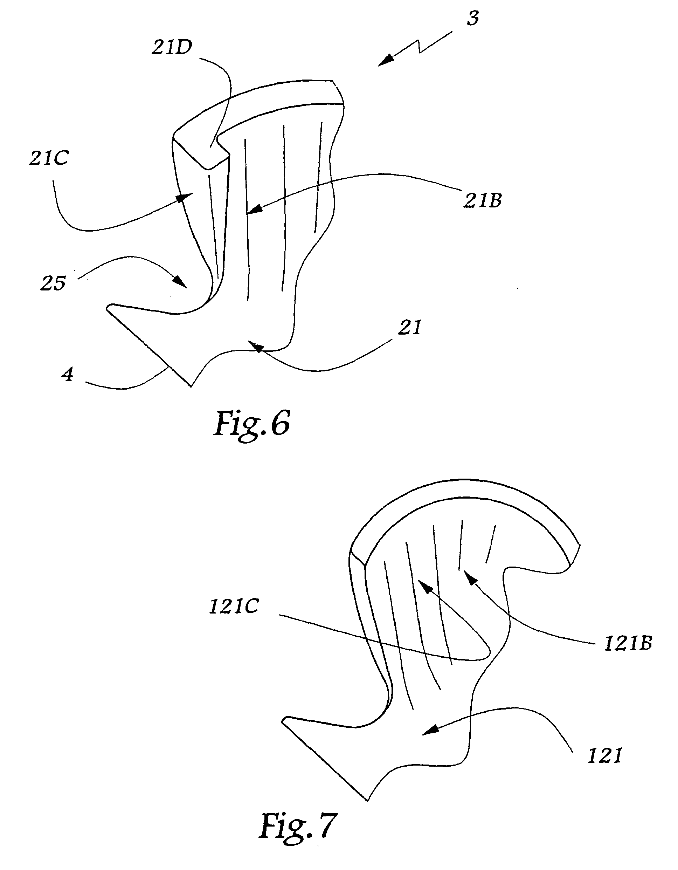

Comme il ressort plus particulièrement des figures 2 et 6, les parties radiales externes 21B et 22B des surfaces concaves 21 et 22 sont chacune pourvues d'une nervure 21C ou 22C jouxtant l'échancrure 25. Ces nervures ont pour fonction de dévier l'écoulement d'eau représenté par la flèche $F_3$ à la figure 2 vers l'extérieur de l'espace E'' défini entre les flasques 5 et 6.

Pour éviter que l'écoulement d'eau dévié par les nervures 21C et 22C ne frappe les bords rectilignes 72 et équivalents des logements 7 et 8, ces bords sont pourvus, sur les faces externes 5A, 6A des flasques 5 et 6, de dégagements, 73 pour les bords des logements 7 et 83 pour les bords des logements 8. Grâce à ces dégagements 73 et 83, l'écoulement d'eau $F_3$ peut être évacué sans générer un effort de freinage de la roue qui pourrait intervenir si l'eau s'écoulant sur les surfaces 21 et 22 frappait les bords 72 et équivalents des logements 7 et 8.

Comme il ressort plus particulièrement de la figure 6, la nervure 21$\underline{c}$ a une profondeur et une épaisseur décroissantes en s'éloignant du bord 21D de la surface 21.

Comme le montre, la figure 7, la fonction de la nervure 21$\underline{c}$ peut également être obtenue par une zone concave 121C prévue dans la partie radiale externe 121B de la surface concave 121 d'un auget conforme à un second mode de réalisation.

Du côté de la partie interne 21A ou 22A des surfaces 21 et 22, celles-ci sont pourvues d'un garnissage 21E ou 22E permettant de dévier également l'écoulement $F_3$ vers l'extérieur des flasques 5 et 6, sans interférence avec les bords rectilignes des logements 7 et 8.

Comme précédemment, des dégagements 74 et 84 peuvent être prévus sur les flasques 5 et 6, au niveau des bords des logements 7 et 8, pour éviter une interférence entre l'écoulement $F_3$ et ces bords. En variante, les garnissages 21E et 22E s'étendent jusqu'à l'extérieur des flasques 7 et 8, de telle sorte qu'il n'est pas nécessaire de prévoir des dégagements dans les parties internes des bras 11 et 12.

L'invention a été décrite avec une roue de turbine comprenant une jante et deux flasques rapportés sur cette jante. Elle est également applicable au cas où la jante est formée de deux demi-jantes intégrant chacune une partie annulaire formant flasque, comme décrit dans le second mode de réalisation de WO-A-99/49213 et, plus généralement, à toute roue de turbine comprenant une jante et au moins un flasque.

**Revendications**

1. Procédé d'assemblage d'une roue de turbine de type Pelton comprenant une jante (1), plusieurs augets (2) répartis à la périphérie de cette jante et au moins un flasque annulaire (5, 6) solidaire de ladite jante et pourvu de logements (7, 8) de réception desdits augets, **caractérisé en ce qu'**il consiste à :

   - pré-positionner, dans un logement (7) dudit flasque, un auget (2) en appui par une partie (23C) de sa face externe convexe (23) contre un bord (71) dudit logement, en ménageant un espace (E') entre la face convexe (23B) de la partie radiale externe (2B) dudit auget et ledit bord (71) ;
   - réaliser une liaison articulée dudit auget (2) sur ladite jante (1) et/ou ledit flasque (5) du côté intérieur (2A) dudit auget ;
   - exercer sur ladite partie radiale externe (2B) dudit auget un premier effort calibré ($F_1$) de rapprochement par rapport audit flasque ;
   - déterminer la distance (e) entre cette partie radiale externe (2B) et ce bord (71) sous ledit effort ($F_1$) ;
   - relâcher ledit effort ($F_1$) ;
   - disposer, entre ladite partie radiale externe (2B) et ledit bord (71), une cale (53) d'épaisseur sensiblement égale à ladite distance ($\underline{e}$) et
   - exercer sur ladite partie radiale externe (2B), et maintenir, un second effort ($F_2$) de rapprochement par rapport audit bord (71), ledit second effort ($F_2$) ayant une intensité supérieure ou égale à celle dudit premier effort ($F_1$).

2. Procédé selon la revendication 1, **caractérisé en ce qu'**il consiste à exercer lesdits efforts calibrés ($F_1$, $F_2$) au moyen d'une vis de blocage (52) reçue dans un logement (51) ménagé dans ledit flasque (5, 6) et pénétrant dans un taraudage (23D) ménagé dans la partie radiale externe (2B) dudit auget (2).

3. Procédé selon l'une des revendications 1 ou 2, **caractérisé en ce que** lesdits premier et second efforts calibrés ($F_1$, $F_2$) de rapprochement sont sensiblement de même intensité.

4. Auget de roue de turbine de type Pelton comprenant une face bi-concave (21, 22) d'écoulement ($F_3$) d'un fluide d'entraînement de ladite roue et une face convexe (23, 24) apte à coopérer avec au moins un flasque annulaire (5, 6) solidaire d'une jante (1) de ladite roue, **caractérisé en ce que** ladite face convexe (23) forme au moins une zone (23C) d'appui localisé contre ledit flasque (5, 6) et au moins une zone distante (23B) dudit flasque dans une partie radiale externe (2B) dudit auget (2), ladite zone (23B) distante dudit flasque étant apte à être rapprochée d'une partie en regard dudit flasque par un effort calibré ($F_1$, $F_2$).

5. Auget selon la revendication 4, **caractérisé en ce que** ladite face convexe (23, 24) forme une zone (23A) distante dudit flasque (5, 6) dans une partie radiale (2A) interne dudit auget (2).

6. Auget selon l'une des revendications 4 ou 5, **caractérisé en ce qu'**il comprend, au niveau de la partie radiale externe (21B, 22B) et/ou de la partie radiale interne (21A, 22A) de sa face concave (21, 22), au moins un guide (21C, 22C, 21E, 22E) apte à conférer à l'écoulement ($F_3$) dudit fluide une composante divergente accentuée par rapport à l'arête médiane (4) dudit auget (2).

7. Auget selon la revendication 6, **caractérisé en ce que** ledit guide (21C, 22C, 21E, 22E) est apte à diriger ledit écoulement ($F_3$) jusqu'au niveau d'un dégagement (73, 74, 83, 84) ménagé dans un bras rayonnant (11, 12) dudit flasque (5, 6) disposé en regard de ladite surface concave (21, 22).

8. Auget selon l'une des revendications 6 ou 7, **caractérisé en ce que** ledit guide est formé par une nervure (21C, 22C) s'étendant, à partir d'une zone (2B) d'extrémité radiale externe dudit auget (2), en direction d'une partie radiale interne(2A) dudit auget, cette nervure bordant une échancrure externe (25) dudit auget.

9. Roue de turbine de type Pelton comprenant une jante (1) et au moins un flasque annulaire (5, 6) solidaire de ladite jante et. pourvu de logements (7, 8) de réception d'augets, **caractérisée en ce qu'**elle comprend au moins un auget (2) selon l'une des revendications 4 à 8.

10. Roue de turbine selon la revendication 9, **caractérisée en ce qu'**elle comprend, pour ledit auget (2) ou chacun desdits augets, une cale (53) disposée entre ladite zone distante (23B) et ledit flasque (5, 6), ledit auget ou chacun desdits augets étant soumis à un effort calibré ($F_2$) de rapprochement de ladite zone distante et dudit flasque.

11. Roue de turbine selon l'une des revendications 9 ou 10, **caractérisée en ce que** ledit ou chaque flasque (5, 6) est pourvu de dégagements (73, 74, 83, 84) d'écoulement du fluide d'entraînement de la turbine à partir de la surface concave (21, 22) de chaque auget (2), lesdits dégagements étant formés sur une face latérale (5A, 6A) externe dudit flasque (5, 6).

**Patentansprüche**

1. Verfahren zum Zusammensetzen eines Pelton-Turbinenrades umfassend einen Radkranz (1), mehrere Schaufeln (2),'die am Umfang dieses Radkranzes verteilt sind, und mindestens einen ringförmigen Flansch (5, 6), der fest mit dem Radkranz verbunden ist und mit Aufnahmen (7, 8) für die Schaufeln versehen ist, **dadurch gekennzeichnet, dass** es darin besteht:

- eine Schaufel (2) in einer Aufnahme (7) des Flansches mittels eines Teils (23C) ihrer konvexen Außenfläche (23) gegen einen Rand (71) der Aufnahme in Abstützung vorzupositionieren, indem ein Raum (E') zwischen der konvexen Fläche (23B) des radialen Außenteils (2B) der Schaufel und dem Rand (71) vorgesehen wird;

- eine angelenkte Verbindung der Schaufel (2) an dem Radkranz (1) und/oder dem Flansch (5) von der Innenseite (2A) der Schaufel herzustellen,

- auf das radiale Außenteil (2B) der Schaufel eine erste kalibrierte Kraft ($F_1$) zur Annäherung bezüglich des Flansches auszuüben;

- den Abstand (e) zwischen diesem radialen Außenteil (2B) und diesem Rand (71) bei dieser Kraft ($F_1$) zu bestimmen;

- die Kraft ($F_1$) loszulassen;

- zwischen dem radialen Außenteil (2B) und dem Rand (71) ein Füllstück (53) mit einer Dicke anzuordnen, die im Wesentlichen gleich dem Abstand (e) ist;

- auf das radiale Außenteil (2B) eine zweite Kraft ($F_2$) zur Annäherung in Bezug auf den Rand (71) auszuüben und zu halten, wobei die zweite Kraft ($F_2$) eine Stärke aufweist, die größer als die oder gleich der der ersten Kraft ($F_1$) ist.

**2.** Verfahren nach Anspruch 1, **dadurch gekennzeichnet, dass** es darin besteht, die Kalibrierkräfte ($F_1$, $F_2$) mittels einer Blockierschraube (52) auszuüben, die in einer in den Flansch (5, 6) eingearbeiteten Aufnahme (51) aufgenommen ist und in ein in das radiale Außenteil (2B) der Schaufel (2) eingearbeitetes Gewinde (23D) eingreift.

**3.** Verfahren nach einem der Ansprüche 1 oder 2, **dadurch gekennzeichnet, dass** die erste und zweite Kalibrierkraft ($F_1$, $F_2$) zur Annäherung im Wesentlichen von gleicher Stärke sind.

**4.** Schaufel eines Pelton-Turbinenrades umfassend eine bikonkave Fläche (21, 22) für das Strömen ($F_3$) eines Antriebsfluids für das Rad und eine konvexe Fläche (23, 24), die in der Lage ist, mit mindestens einem mit einem Radkranz (1) des Rades fest verbundenen Ringflansch (5, 6) zusammenzuarbeiten, **dadurch gekennzeichnet, dass** die konvexe Fläche (23) mindestens eine örtlich begrenzte Abstützzone (23C) gegen den Flansch (5, 6) und mindestens eine mit Abstand zum Flansch liegende Zone (23D) des Flansches in einem radialen Außenbereich (2B) der Schaufel (2) bildet, wobei die mit Abstand zum Flansch liegende Zone (23B) zu einem zu dem Flansch gegenüberliegenden Teil durch eine Kalibrierkraft ($F_1$, $F_2$) angenähert werden kann.

**5.** Schaufel nach Anspruch 4, **dadurch gekennzeichnet, dass** die konvexe Fläche (23, 24) eine mit Abstand zum Flansch (5, 6) in einem radialen Innenbereich (2A) der Schaufel (2) liegende Zone (23A) bildet.

**6.** Schaufel nach einem der Ansprüche 4 oder 5, **dadurch gekennzeichnet, dass** sie an dem radialen Außenteil (21B, 22B) und/oder dem radialen Innenteil (21A, 22A) ihrer konkaven Fläche (21, 22) mindestens eine Führung (21C, 22C, 21E, 22E) umfasst, die der Strömung ($F_3$) des Fluids eine hervorstechende divergierende Komponente in Bezug auf eine Mediankante (4) der Schaufel (2) mitteilen kann.

**7.** Schaufel nach Anspruch 6, **dadurch gekennzeichnet, dass** die Führung (21G, 22C, 21E, 22E) geeignet ist, die Strömung ($F_3$) bis zu einer Freisetzung (73, 74, 83, 84) zu richten, die in einen strahlenförmigen Arm (11, 12) des Flansches (5, 6) eingearbeitet ist, der gegenüberliegend zur konkaven Fläche (21, 22) angeordnet ist.

**8.** Schaufel nach Anspruch 6 oder 7, **dadurch gekennzeichnet, dass** die Führung durch eine Rippe (21C, 22C) gebildet ist, die sich von einer radialen Außenrandzone (2B) der Schaufel (2) in Richtung eines radialen Innenteils (2A) der Schaufel (2) erstreckt, wobei diese Rippe eine äußere bogenförmige Ausnehmung (25) der Schaufel begrenzt.

**9.** Turbinenrad des Typs Pelton umfassend einen Radkranz (1) und mindestens einen Ringflansch (5, 6), der fest mit dem Radkranz verbunden ist und mit Aufnahmen (7, 8) für Schaufeln versehen ist, **dadurch gekennzeichnet, dass** es mindestens eine Schaufel (2) nach einem der Ansprüche 4 bis 8 umfasst.

**10.** Turbinenrad nach Anspruch 9, **dadurch gekennzeichnet, dass** es für die Schaufel (2) oder jede der Schaufeln ein Füllstück (53) umfasst, das zwischen der beabstandeten Zone (23B) und dem Flansch (5, 6) angeordnet ist, wobei die Schaufel oder jede der Schaufeln einer kalibrierten Kraft ($F_2$) zur Annäherung der entfernten Zone und des Flansches unterworfen wird.

**11.** Turbinenrad nach einem der Ansprüche 9 oder 10, **dadurch gekennzeichnet, dass** der oder jeder Flansch (5, 6) mit Freisetzungen (73, 74, 83, 84) für die Strömung des Antriebsfluids der Turbine von der konkaven Fläche (21, 22) jeder der Schaufeln (2) versehen ist, wobei die Freisetzungen auf der seitlichen Außenfläche (5A, 6A) des Flansches (5, 6) gebildet sind.

**Claims**

**1.** Method for assembling a turbine wheel of the Pelton type, comprising a wheel rim (1), a plurality of buckets (2) distributed on the periphery of this wheel rim and at least one annular flange (5, 6) which is integral with said wheel rim and provided with housings (7, 8) for receiving said buckets, **characterised in that** it comprises:

- pre-positioning, in a housing (7) of said flange, a bucket (2) abutting by one part (23C) of its external convex face (23) against an edge (71) of said housing, providing a space (E') between the convex face (23B) of the external radial part (2B) of said bucket and said edge (71);

- producing an articulated joint of said bucket (2) on said wheel rim (1) and/or said flange (5) on the interior side (2A) of said bucket;

- exerting on said external radial part (2B) of said bucket a first calibrated assembly force ($F_1$) relative to said flange;

- determining the distance (e) between this external radial part (2B) and this edge (71) under said force ($F_1$);

- releasing said force ($F_1$);

- disposing, between said external radial part (2B) and said edge (71), a shim (53) of a thickness substantially equal to said distance (e) and

- exerting on said external radial part (2B), and maintaining, a second assembly force ($F_2$) relative to said edge (71), said second force ($F_2$) having an intensity greater than or equal to that of said first force ($F_1$).

2. Method according to claim 1, **characterised in that** it comprises exerting said calibrated forces ($F_1$, $F_2$) by means of an adjustment screw (52) which is received in a housing (51) provided in said flange (5, 6) and penetrates into a female thread (23D) provided in the external radial part (2B) of said bucket (2).

3. Method according to one of the claims 1 or 2, **characterised in that** said first and second calibrated assembly forces ($F_1$, $F_2$) are substantially of the same intensity.

4. Bucket of a turbine wheel of the Pelton type, comprising a bi-concave run-off ($F_3$) face (21, 22) for an entrainment fluid of said wheel and a convex face (23, 24) which is able to cooperate with at least one annular flange (5, 6) which is integral with a wheel rim (1) of said wheel, **characterised in that** said convex face (23) forms at least one zone (23C) of localised support against said flange (5, 6) and at least one zone which is remote from said flange (5, 6) in an external radial part (2B) of said bucket (2), said remote zone (23B) of said flange being able to be assembled with a part opposite said flange by a calibrated force ($F_1$, $F_2$).

5. Bucket according to claim 4, **characterised in that** said convex face (23, 24) forms a zone (23A) which is remote from said flange (5, 6) in an internal radial part (2A) of said bucket (2).

6. Bucket according to one of the claims 4 or 5, **characterised in that** it comprises, at the level of the external radial part (21B, 22B) and/or of the internal radial part (21A, 22A) of its concave face (21, 22), at least one guide (21C, 22C, 21E, 22E) which is able to impart to the run-off ($F_3$) of said fluid a divergent component which is accentuated relative to the median ridge (4) of said bucket (2).

7. Bucket according to claim 6, **characterised in that** said guide (21C, 22C, 21E, 22E) is able to direct said run-off ($F_3$) to the level of a clearance hole (73, 74, 83, 84) which is provided in a radiating arm (11, 12) of said flange (5, 6) which is disposed opposite said concave surface (21, 22).

8. Bucket according to one of the claims 6 or 7, **characterised in that** said guide is formed by a rib (21C, 22C) which extends, from an external radial end zone (2B) of said bucket (2), in the direction of an internal radial part (2A) of said bucket, this rib bordering an external notch (25) of said bucket.

9. Turbine wheel of the Pelton type comprising a wheel rim (1) and at least one annular flange (5, 6) which is integral with said wheel rim and provided with housings (7, 8) for receiving buckets, **characterised in that** it comprises at least one bucket (2) according to one of the claims 4 to 8.

10. Turbine wheel according to claim 9, **characterised in that** it comprises, for said bucket (2) or each of said buckets, a shim (53) which is disposed between said remote zone (23B) and said flange (5, 6), said bucket or each of said buckets being subjected to a calibrated force ($F_2$) for assembly of said remote zone and of said flange.

11. Turbine wheel according to one of the claims 9 or 10, **characterised in that** said or each flange (5, 6) is provided with clearance holes (73, 74, 83, 84) for run-off of the entrainment fluid of the turbine from the concave surface (21, 22) of each bucket (2), said clearance holes being formed on an external lateral face (5A, 6A) of said flange (5,6).

*Fig.1*

Fig.2

Fig.3

Fig.4

Fig.5

21D

21C

21B

25

4

21

3

## Fig.6

121C

121B

121

## Fig.7